# EUROPEAN PATENT APPLICATION

(11) **EP 1 524 757 A2**
(43) Date of publication of application: **20.04.2005**
(21) Application number: 04255106.9
(22) Date of filing: 25.08.2004
(51) Int. Cl.: H02M 3/07

(54) **Negative charge pump**

(30) Priority: 14.10.2003 US 685132
(71) Applicant: Monolithic Power Systems, Inc., Los Gatos, CA 95032 (US)
(72) Inventor: Robinson, Curtis B., Jr., Sunnyvale California 94087 (US)
(74) Representative: Hackney, Nigel John

(57) **Abstract**

A negative charge pump is disclosed. The negative charge pump may be used to drive white LEDs in one application. The negative charge pump uses predominantly n-channel transistor switches that enables a smaller integrated circuit area. Further, a soft start mechanism is used in starting the charge pump.

## Description

The present invention relates to integrated circuit charge pumps, more particularly, to a negative charge pump useful for driving white LEDs.

Charge pumps are devices that are capable of operating as power supplies for electronic circuitry. Charge pumps provide a controlled output voltage that is higher than the charge pump's input voltage. In the case of a positive charge pump, the increased voltage is created between its positive output and the negative supply. Alternatively, a negative charge pump is a charge pump that can provide a voltage that is higher in magnitude than the input voltage between the positive supply and its negative output. In general, a charge pump is a capacitor and oscillator-based circuit which converts a DC input voltage to a DC output voltage that is either higher, lower, or inverted in voltage value. In addition, most charge pumps can operate in various modes. Typically, these modes are 1x, 1.5x, 2x, or higher. These modes indicate that the output voltage is some multiple of the input voltage and the number of pumping or switching capacitors used.

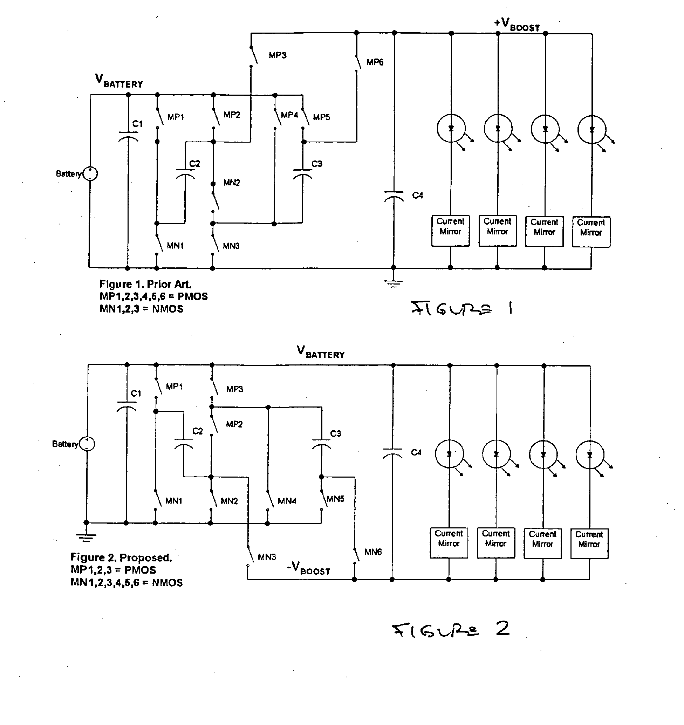

Figure 1 shows a prior art charge pump. To understand the operation of the positive charge pump of Figure 1, various transistors are treated as switches. In the 1x mode, switches MP2, MP3, MP5 and MP6 are closed. To prevent floating of capacitors C2 and C3, switches MN1 and MN3 are closed to keep those capacitors charged. In the 1.5x mode, two closures are completed at a fixed frequency, typically 1-10 MHz. First, the switching capacitors C2 and C3 are charged from C1, which is tied to the battery by closing switches MN1, MN2, and MP5. This charges capacitors C2 and C3 to be half the voltage of the battery (assuming C2 and C3 have the same capacitance). Then all of the switches are opened momentarily and switches MP1, MP3, MP4 and MP6 are closed to discharge the capacitor C4 on the output. The two switching capacitors C2 and C3 in parallel add half of the battery voltage on top of the full battery voltage.

In 2x mode, there are two closures completed at the same frequency. First, capacitors C2 and C3 are charged to the full battery voltage from capacitor C1 by closing switches MN1, MP2, MN3, and MP5. All of the switches are opened momentarily and then switches MP1, MP3, MP4, and MP6 are closed to discharge to capacitor C4. The two switching capacitors in parallel add the full battery voltage on top of the first battery voltage, resulting in a 2x mode operation.

Note that for a positive charge pump, two-thirds of the switching devices are performed on the high voltage side. This requires P channel MOSFETs or PNP bipolar devices which can be 50-100% larger than the corresponding N channel MOSFETs or NPN bipolar counterparts on the negative side. In other words, as seen in Figure 1, of the nine switching transistors, six of them are P-type and only three of them are N-type. As a result, the positive charge pump is necessarily large.

### BRIEF DESCRIPTION OF THE DRAWINGS

In a first aspect the present invention provides a negative charge pump according to claim 1.
Figure 1 is a schematic diagram of a prior art charge pump used in an LED application.
Figure 2 is a schematic diagram of a charge pump formed in accordance with the present invention as used in an LED application.
Figures 3A and 3B show the circuit during a 1X mode of operation for the prior art and the present invention, respectively.
Figures 4A and 4B show the circuit during a 1.5X mode of operation for the prior art and the present invention, respectively.
Figures 5A and 5B show the circuit during a 2X mode of operation for the prior art and the present invention, respectively.

### DETAILED DESCRIPTION

In the detailed description provided below, numerous specific details are provided to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

Figure 2 shows a negative charge pump formed in accordance with the present invention. As seen, it is similar to the prior art charge pump of Figure 1 except that: (1) the n-type devices have been replaced with p-type devices, and (2) the p-type devices have been replaced with n-type devices. The theory of the operation is the same as that of Figure 1. Because the circuit of Figure 2 uses six n-channel MOSFETs, instead of the six p-channel MOSFETs, this will make the resulting circuit smaller to implement as an integrated circuit. In general, p-channel transistors are 50 to 100 percent larger than the "equivalent" n-channel transistor.

One requirement of the negative charge pump is the pumping action must be below the ground or substrate of the die with respect to the positive supply. For many die processes, this method requires substrate switching and pumping so that the substrate remains the most negative potential. If the substrate of the die should rise a diode voltage above the lowest potential on the die, the die can forward bias its substrate and suffer a latchup failure. A positive charge pump's output can fall below its positive supply, but a negative pump cannot have the output rise above the negative supply without some protection. When its output is being pumped below the negative supply, the substrate is connected to the output and is pumped down with the output to prevent any forward bias. During the soft start transitions between all modes, the substrate and output is monitored to determine if it crosses the negative supply. Should that happen, the substrate and the output are clamped to the negative supply to prevent any further possibility of forward bias. This clamp releases when active pumping resumes.

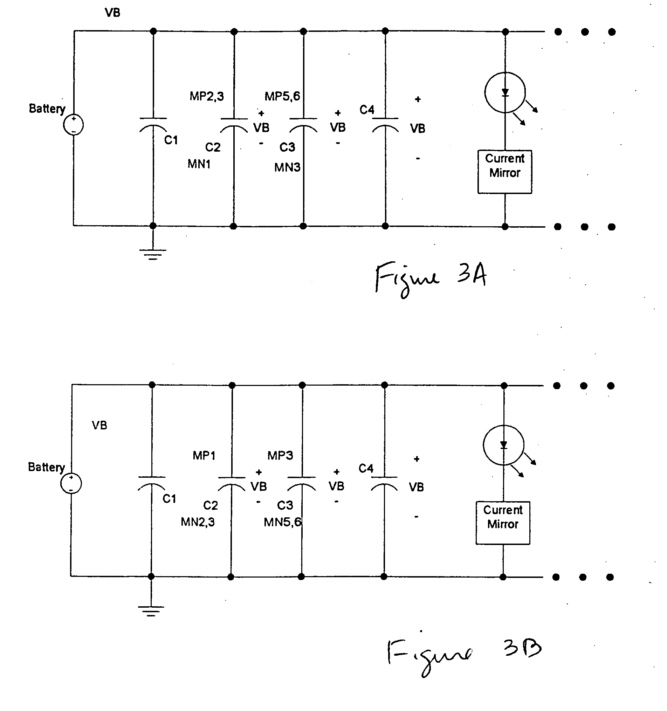

The operation of the circuit shown in Figure 2 is similar to that of the prior art. As noted above, the negative charge pump utilizes predominantly n-channel transistors. Figure 3A shows the charge pump for the prior art operating in a 1x mode. In the 1x mode, transistors, MP2, MP3, MP5, and MP6 are closed. Transistors MN1 and MN3 are also closed. The result of the circuit is shown in Figure 3A which shows a battery voltage VB across the output capacitor C4.

Analogously, for the present invention operating in a 1x mode, as shown in Figure 3B, the switches (transistors) MP1 and MP3 are closed. Additionally, transistors MN2, MN3, MN5, and MN6 are closed. The result is a negative battery voltage presented on the output capacitor C4. Capacitors C1, C2, and C3 are referred to as charging capacitors are are connected through switches MP1, MP2, and MP3 to a high voltage rail. The capacitors C1, C2, and C3 is also connected to a low voltage potential through switches MN1-MN6. Similarly, the output capacitor C4 is connected between a low (negative) voltage potential (typically the substrate) and a high voltage rail.

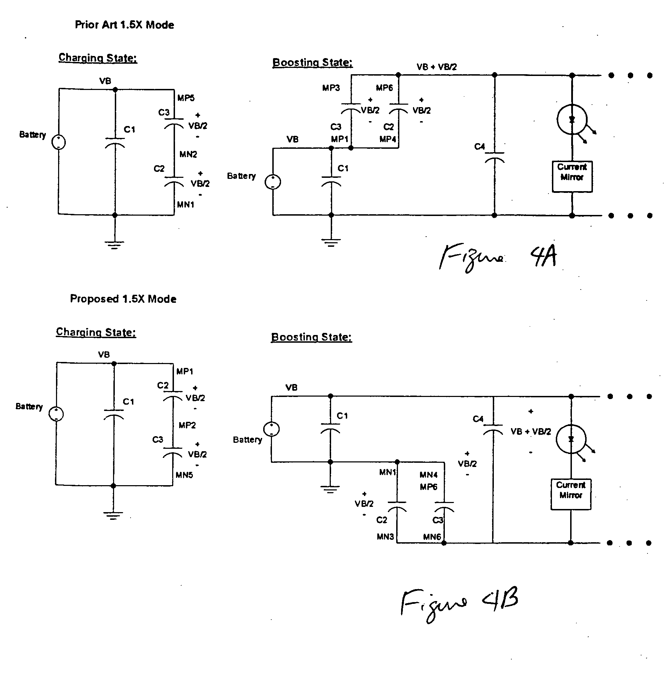

The circuit topology during a charging state and a boosting state for the present invention is shown in Figure 4B. In the charging state, MP1, MP2, and MN5 are all closed. This results in the circuit shown in Figure 4B for the charging state. During the boosting state, the transistors MN1, MN3, MN4, MN6 and MP6 are all closed. The remaining transistors are open. The resulting circuit is shown in Figure 4B. As seen in Figure 4B, the resulting circuit provides an output voltage across the capacitor C4 of a 1.5 times the battery voltage VB. The analogous charging and boosting circuitry for the prior art positive charge pump is shown in Figure 4A.

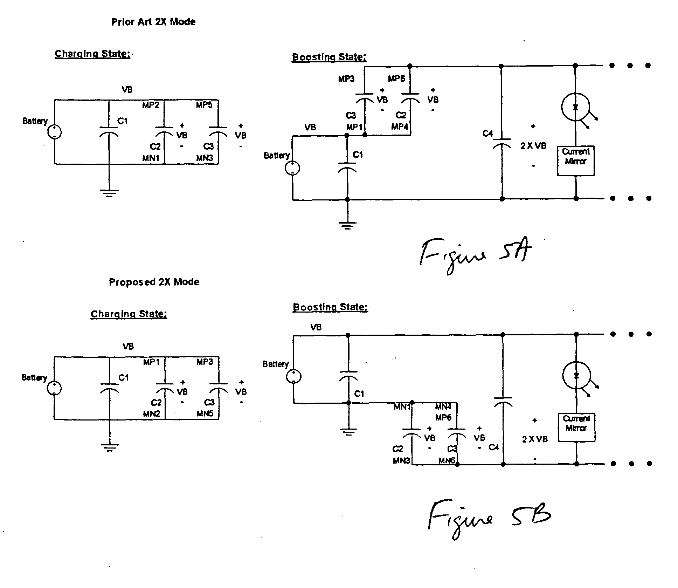

Turning to Figure 5B, when the negative charge pump of the present invention is used in a 2x mode, in a charging state, the transistors MP1, MP3, MN2, and MN5 are all closed. The remaining transistors are all open. The resulting circuit diagram is shown in Figure 5B under the heading charging state. The corresponding prior art positive charge pump is shown in its charging state in Figure 5A. In the boosting state, in Figure 5B, the transistors MN1, MN3, MN4, and MN6 are all closed. The remaining transistors are open. The resulting output voltage across the capacitor C4 is twice the battery voltage VB. The prior art positive charge pump circuit in the boosting state is shown in Figure 5A.

As can be seen in the above description and in Figures 3-5, the operation of the negative charge pump is analogous to that of the prior art positive charge pump. However, advantageously, the negative charge pump requires a lessor amount of integrated circuit real estate in order to implement and can fit in a smaller package.

### Safety Mode for the Output

Further, it should be noted that the use of a charge pump requires that the substrate not be allowed to float when the integrated circuit is disabled or inactive. For a positive charge pumps, the output may decay below the positive supply. This is safe and there is no latch-up problem to use a diode to prevent it from sinking further. However, in negative charge pumps, the substrate should be controlled to prevent it from rising above the negative supply. Latch-up may occur if allowed to rise a diode above the negative supply. In some embodiments, a Schottky diode is used for this function with its reduced forward voltage. It can clamp the output down before the substrate related diodes turn on. During transient operation however the substrate can still turn on with the Schottky diode in place. To prevent this, in another aspect of the present invention, a low current supervisory circuit runs in shutdown mode or during the transition between pumping modes to catch the output as it decays back to the negative supply. Once the output is at the negative supply level, the supervisory circuit turns on switches MN2, MN3, MN5, and MN6 to connect the output directly to the negative power supply. Once this task is done, the supervisory circuit shuts down itself so that there is no further power drain

### Soft Start for Output

Furthermore, because of the constant frequency operation, a segmented soft start of the MN2 and MN5 switches is used. In one embodiment, the switches MN2 and MN5 are each implemented as a plurality of transistors, for example, three separate transistors. On initial operation, in one embodiment, the smallest of the three transistors operates for a fixed number of cycles. Subsequently, the second transistor starts operating in combination with the first transistor again for a number of cycles. Lastly, the third transistor is then activated so that all three transistors are operative. In this manner, the net power delivered is ramped in fixed time steps as the smallest to largest transistors operation is sequentially utilized to achieve soft start of the device. After soft start is completed, all three transistors are switched on and off at the same time.

From the foregoing, it will be appreciated that specific embodiments of the invention have been described herein for purposes of illustration, but that various modifications may be made without deviating from the spirit and scope of the invention. Accordingly, the invention is not limited except as by the appended claims.

## Claims

1. A negative charge pump formed on a semiconductor substrate comprising:
a power supply having having first terminal connected to said substrate and a second terminal connected to a high voltage rail;
an output capacitor connected between said high voltage rail and said substrate;
a plurality of charging capacitors connected between said high voltage rail and said substrate, said charging capacitors connected to said high voltage rail by a first set of transistor switches and connected to said substrate by a second set of transistor switches;
wherein said second set of switches are NMOS transistors and said first set of switches are PMOS switches.

2. The negative charge pump of Claim 1 further including a supervisory circuit operative in a shutdown mode to catch the output voltage to said negative supply voltage.

3. The negative charge pump of Claim 1 wherein at least one of said second set of switches is formed from a plurality of transistors that are staggered in switching on during a soft start mode.
